# EUROPÄISCHE PATENTSCHRIFT

(11) **EP 0 347 654 B1**
(45) Veröffentlichungstag und Bekanntmachung des Hinweises auf die Patenterteilung: **04.08.1993**
(21) Anmeldenummer: 89110341.8
(22) Anmeldetag: 08.06.1989
(51) Int. Cl.: F16D 66/02

(54) **Geber für den Betriebszustand von Bremsen**
Brake operation status detector
Détecteur de l'état de fonctionnement des freins

(30) Priorität: 18.06.1988 DE 8807884 U
(43) Veröffentlichungstag der Anmeldung: 27.12.1989
(73) Patentinhaber: Mannesmann Kienzle GmbH (HR B1220), 78052 Villingen-Schwenningen (DE)
(72) Erfinder: Kastler, Ernst, D-7737 Bad Dürrheim 4 (DE)

(56) Entgegenhaltungen:
- DE-A- 2 144 466
- DE-A- 3 319 988
- DE-A- 3 502 053
- FR-A- 2 242 603

## Beschreibung

Die Erfindung betrifft einen Geber für den Betriebszustand von Bremsen mit einem Verschleißsensor und einem Temperatursensor, welche gemeinsam in einem hülsenförmigen Gehäuse eingebettet sind, das in eine in Bremsbacke und Bremsbelag befindliche Durchgangsbohrung derart einsetzbar ist, daß eine Stirnfläche des Gehäuses im wesentlichen bündig ist mit der Reibfläche des Bremsbelages.

An einen derartigen Geber, der, um unzulässige Betriebszustände zu vermeiden, durch rechtzeitige Signalgabe eine vorbeugende Wartung auslösen soll und der bekanntermaßen in einem außerordentlich rauhen Milieu eingesetzt ist, müssen hohe Anforderungen hinsichtlich einer zweifelsfreien Funktion gestellt werden. Kritische Meßbedingungen bestehen insbesondere hinsichtlich des Temperatursensors, der,von der Eignung für hohe Temperaturen abgesehen, außerhalb des Verschleißbereichs des Bremsbelages angeordnet werden muß, die Temperatur der Reib- bzw. Bremsfläche aber unabhängig vom Abnutzungsgrad des Bremsbelags erfassen sollte. Ein solcher Geber ist andererseits aber auch ein Verschleißteil, das bei jedem Bremsbelagwechsel neu anzubringen ist und somit, auch um die Akzeptanz des Gebers zu fördern, kostengünstig herstellbar und problemlos montierbar sein sollte.

Eine durch die DE-A-21 44 466 bekannt gewordene Kombination eines Verschleißsensors mit einem Temperaturschalter ist insbesondere wegen der erforderlichen Justierarbeit nur mit relativ hohem Aufwand herstellbar und aufgrund des konstruktiven Aufbaus für die Serienfertigung ungeeignet. Andererseits ist diese Lösung funktionell fragwürdig deshalb, weil ein Bimetallschalter Anwendung findet, die Wärmeübertragung abhängig ist vom Abnutzungsgrad des Bremsbelages und im Wärmeübertragungsweg schlechte Wärmeleiter, nämlich ein Luftpolster bzw. der Bremsbelag und mehrere als Störstellen wirkende Materialübergänge, sich befinden, und somit erheblicher Wärmeverlust und Laufzeiteffekte in Kauf zu nehmen sind.

Die Aufgabe der Erfindung bestand demnach darin, für einen gattungsgemäßen Geber eine Architektur zu finden, die trotz einer weitgehenden Kostenminimierung und einer Herstellung unter Großserienbedingungen eine zufriedenstellende Reproduzierbarkeit und einen hohen Grad an Funktionssicherheit gewährleistet.

Die Lösung dieser Aufgabe sieht vor, daß ein in das Gehäuse reibflächenbündig einsetzbarer, metallischer Kontaktträger vorgesehen ist, welcher als Wärmeleiter dient und einen Teil des Verschleißsensors darstellt und bei welchem das Abmaß in Verschleiß- bzw. Abtragungsrichtung größer ist als die maximale Stärke des Bremsbelages, daß an dem Kontaktträger in einem die Verschleißsignalgabe bestimmenden Abstand von dessen reibflächenbündigem Ende ein Leiter wenigstens eines Signalstromkreises angeschweißt ist und daß der Temperatursensor außerhalb des durch die Schweißstelle definierten Verschleißbereichs dem Kontaktträger räumlich unmittelbar zugeordnet ist.

Ein bevorzugtes Ausführungsbeispiel ist dadurch gekennzeichnet, daß zwischen dem Kontaktträger und dem Gehäuse eine lose Verbindung vorgesehen ist, daß der Kontaktträger außerhalb des Verschleißbereichs mit einer Masseleitung kontaktiert ist und daß ein Anschlußdraht des Temperatursensors mit dem Kontaktträger verschweißt ist.

Die Erfindung bietet den Vorteil, daß einerseits die thermische Verbindung für den außerhalb des Verschleißbereichs befindlichen Temperatursensor, andererseits die elektrische Verbindung, welche für die Verschleißsignalgabe zu unterbrechen ist, mit einem einzigen Bauteil, dem Kontaktträger, gebildet wird. Das bevorzugte, in den Zeichnungen dargestellte Ausführungsbeispiel weist eine in das Gehäuse des Gebers lose einführbare Baueinheit auf, bei der der Massekontaktierung dienende Preßpassungen vermieden sind. Eine derartige Massekontaktierung ist fertigungstechnisch aufwendig und durch Korrosionsanfälligkeit sowie aufgrund der in der weiteren Leitungsverbindung befindlichen, beweglichen und geschmierten Fahrzeugteile unsicher. Vorteilhaft ist ferner, daß als Kontaktträger ein einfaches Stanzteil verwendet wird und mittels eines Anschlußdrahtes eine starre Befestigung des Temperatursensors an den Kontaktträger vorgesehen ist. Dadurch wird, und zwar außerhalb des Gehäuses, eine genaue Positionierung von Verschleißsensor und Temperatursensor und letzten Endes die Bildung einer einfachen Baueinheit aus Kontaktträger, Temperatursensor und Kabelstrang, der vorzugsweise mit einer Steckverbindung abgeschlossen ist, ermöglicht. Die Werkzeug-und Materialkosten der gefundenen Lösung sind außerordentlich gering, bei der Montage des Gebers ist lediglich ein loses Zusammenfügen der funktionsfähig komplettierten Baueinheit und des Gehäuses und danach ein Vergießen erforderlich. Aufwendiges Einpressen und Justierarbeit sind vermieden, d. h. die gefundene Geberarchitektur ist maschinell montierbar.

Die unmittelbare räumliche Zuordnung des Temperatursensors zum Kontaktträger, der in materiellem Kontakt zur Reib- bzw. Bremsfläche steht, bietet ferner gut reproduzierbare Wärmeübertragungsverhältnisse und ein Minimum an Wärmeverlust, mit anderen Worten konstante und hysteresearme Meßbedingungen.

Im folgenden sei die Erfindung anhand der Zeichnungen näher erläutert. Es zeigen
FIGUR 1 eine Übersichtsdarstellung, die die Anordnung des erfindungsgemäßen Gebers an beispielsweise einer Bremsbacke einer Trommelbremse zeigt,
FIGUR 2 einen Längsschnitt des bevorzugten Ausführungsbeispiels des erfindungsgemäßen Gebers und
FIGUR 3 eine Seitenansicht der in das Gehäuse des Gebers einsetzbaren Baueinheit gemäß Pfeilrichtung P in FIGUR 2.

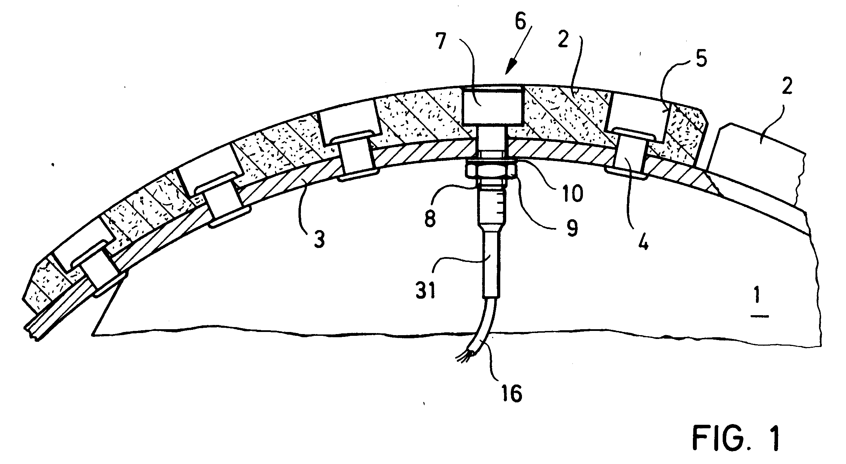

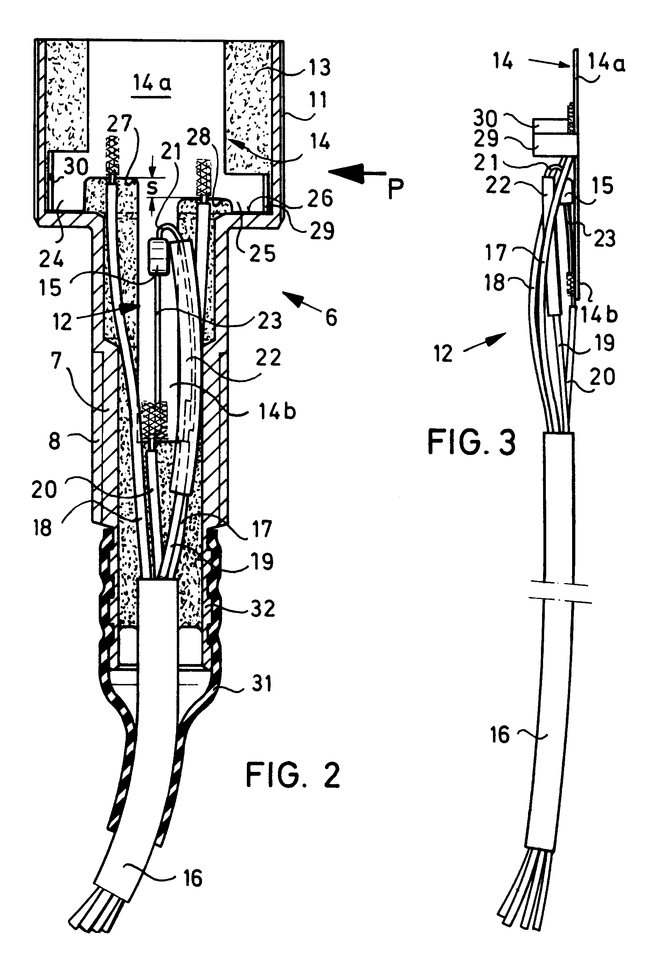

Die Übersichtsdarstellung FIGUR 1 zeigt eine teilweise geschnittene Bremsbacke 1 beispielsweise einer Trommelbremse mit innenliegenden Bremsbacken. Mit 2 ist einer von wenigstens zwei auf einer Schulter 3 der Bremsbacke 1 befestigten Bremsbelägen bezeichnet. Die Befestigung der Bremsbeläge erfolgt üblicherweise mittels mehrerer Niete, von denen eine mit 4 bezeichnet ist und denen im Bremsbelag 2 jeweils eine zylindrische Senkung 5 zugeordnet ist. Der neuerungsgemäße Geber 6 weist ein wenigstens zweistufiges hülsenförmiges Gehäuse 7 auf, welches derart gestaltet ist, daß ein Gehäuseabschnitt größeren Durchmessers den Maßen der zylindrischen Senkung entspricht und ein Gehäuseabschnitt kleineren Durchmessers, der mit einem Gewinde 8 versehen ist, gleich ist dem Durchmesser des Nietschaftes. Somit läßt sich der Geber 6 in für das Nieten des Bremsbelages 2 vorgesehene, nicht näher bezeichnete Durchgangsbohrungen im Bremsbelag 2 und der Schulter 3 der Bremsbacke 1 einsetzen und mittels einer Mutter 9 und einer zwischengelegten Scheibe 10 zwischen Bremsbelag 2 und Bremsbacke 1 festspannen. Als Variante ist es denkbar, beispielsweise den Gehäuseabschnitt größeren Durchmessers des Gebers 6 mit einem Rändel 11 (FIGUR 2) zu versehen, der gegenüber der Senkung 5 im Bremsbelag 2 ein Übermaß aufweist. Die Montage des Gebers 6 erfolgt dann durch Einpressen in die für den Geber 6 vorgesehene Nietöffnung. Dabei hat es sich gezeigt, daß bei dieser Ausführungsvariante ein Verschrauben des Gebers 6 nicht unbedingt erforderlich ist und somit auch das Gewinde 8 entfallen kann.

Das mit der FIGUR 3 dargestellte, bevorzugte Ausführungsbeispiel des Gebers 6 zeigt, daß in das hülsenförmige Gehäuse 7 eine Baugruppe 12 eingesetzt und mittels einer temperaturfesten, keramischen Vergußmasse 13 befestigt und gegen Eindringen von Feuchtigkeit abgedichtet ist. Dabei ist es selbstverständlich, daß die Vergußmasse annähernd die gleichen Verschleißeigenschaften wie das Bremsbelagmaterial aufweist, d. h. weder schmiert, noch die Bremstrommel beschädigt.

Die Baugruppe 12 besteht aus einem Kontaktträger 14, der als einfaches Stanzteil hergestellt ist, einem Temperatursensor 15, beispielsweise ein für hohe Tempraturen geeignetes Widerstandsmeßelement, und einem Kabel 16, von dessen aufgespleisten Leitern 17, 18, 19 und 20 die Leiter 17, 18 und 20 mit dem Kontaktträger 14, der Leiter 19 mit dem einen Anschlußdraht 21 des Temperatursensors 15 vorzugsweise durch Punktschweißen kontaktiert sind. Die letztgenannte Verbindungsstelle ist mittels eines Isolierschlauches 22 abgedeckt. Von den bezeichneten Leitern ist der Leiter 18 Teil eines ersten Signalstromkreises, der Leiter 17 Teil eines zweiten Signalstromkreises und der Leiter 20 führt Massepotential. Der eigentliche Verschleißsensor wird somit von den durch das Punktschweißen gebildeten Kontaktbrükken zwichen dem über den Leiter 20 an Masse liegenden Kontaktträger und den Leitern 17 und 18 der Signalstromkreise gebildet. Wie ferner aus der FIGUR 2 hervorgeht, ist der zweite Anschlußdraht 23 des Temperatursensors an dem zusätzlich als Wärmeleiter dienenden Kontaktträger 14 befestigt und somit mit Masse verbunden. Er bildet aber gleichzeitig eine starre, mechanische Verbindung zwischen dem Temperatursensor 15 und dem Kontaktträger 14, vorzugsweise derart, daß der Temperatursensor 15 den Kontaktträger 14 berührt.

Der Vollständigkeit halber sei noch erwähnt, daß an dem Kontaktträger 14 entsprechend der nicht bezeichneten, gestuften Öffnung bzw. Durchgangsbohrung des hülsenförmigen Gebergehäuses 7 ein breiter Abschnitt 14a und ein schmalerer Abschnitt 14b ausgebildet sind. Die bei dieser Ausbildung sich ergebenden Schultern 24 und 25 begrenzen bei der Montage der Baugruppe 12 deren Einsteckweg, indem sie an der Stufenstirn 26 der Gehäuseöffnung anschlagen. Entsprechend der Gestaltung des Kontaktträgers 14, der dann achsparallel im Gebergehäuse 7 liegt, befindet sich nach der Montage die Stirnfläche des Abschnittes 14a des Kontaktträgers 14 im wesentlichen in der Ebene der Stirnfläche des Gebergehäuses und somit stets in einer reibflächenbündigen Lage.

Unterschiedlich tiefe Ausparungen 27 und 28 sind dafür vorgesehen, daß beim Unterbrechen der jeweiligen Signalstromkreise durch die bremsbedingte Abtragung eine totale Beseitigung des Kontaktträgers im Bereich des jeweiligen angeschnittenen Leiters 17 bzw. 18 gegeben ist. Der eingezeichnete Abstand s stellt das Abtragungsmaß dar, das zwischen einem ersten Signal und einem in der Signalwirkung markanteren zweiten Signal noch zulässig ist. Die an dem Kontaktträger ausgebildeten Lappen 29 und 30 dienen der Zentrierung der Baugruppe 12 beim Einführen in das Gehäuse 7, wobei es nicht zwingend erforderlich ist, daß sie nach dem Einbringen der Vergußmasse 13 mit der Gehäuseöffnung in Berührung stehen.

Dem aus dem Geber 6 herausgeführten Kabel 16 ist eine Zugentlastung in Form einer Schlauchtülle 31 zugeordnet, d. h. die Schlauchtülle 31 ist einerseits auf dem Kabel 16, andererseits auf einem am Gehäuse 7 axial angeformten Schlauchstutzen 32 aufgeschrumpft.

## Patentansprüche

1. Geber (6) für den Betriebszustand von Bremsen mit einem Verschleißsensor (14, 17, 18, 20) und einem Temperatursensor (15), welche gemeinsam in einem hülsenförmigen Gehäuse (7) eingebettet sind, das in eine in Bremsbacke (1) und Bremsbelag (2) einer Bremse befindliche Durchgangsbohrung derart einsetzbar ist, daR eine Stirnfläche des Gehäuses (7) im wesentlichen bündig ist mit der Reibfläche des Bremsbelages (2),
dadurch gekennzeichnet,
daß ein in das Gehäuse (7) reibflächenbündig einsetzbarer metallischer Kontaktträger (14) vorgesehen ist, welcher als Wärmeleiter dient und einen Teil des Verschleißsensors (14, 17, 18, 20) darstellt und bei welchem das Abmaß in Verschleiß- bzw. Abtragungsrichtung größer ist als die maximale Stärke des Bremsbelages (2),
daß an dem Kontaktträger (14) in einem die Verschleißsignalgabe bestimmenden Abstand von dessen reibflächenbündigem Ende ein Leiter (17) wenigstens eines Signalstromkreises angeschweißt ist und
daß der Temperatursensor (15) außerhalb des durch die Schweißstelle definierten Verschleißbereichs dem Kontaktträger (14) räumlich unmittelbar zugeordnet ist.

2. Geber nach Anspruch 1,
dadurch gekennzeichnet,
daS zwischen dem Kontaktträger (14) und dem Gehäuse (7) eine lose Verbindung vorgesehen ist, daß der Kontaktträger (14) außerhalb des Verschleißbereichs mit einer Masseleitung (20) kontaktiert ist.

3. Geber nach Anspruch 1,
dadurch gekennzeichnet,
daS ein Anschlußdraht (23) des Temperatursensors (15) mit dem Kontaktträger (14) verschweißt ist.

4. Geber nach Anspruch 1,
dadurch gekennzeichnet,
daß der Kontaktträger (14) als ein achsparallel in das Gehäuse (7) einsetzbares, flaches Stanzteil ausgebildet ist.

5. Geber nach Anspruch 1,
dadurch gekennzeichnet,
daß an dem Kontaktträger (14) Zentrierlappen (29, 30) angeformt sind.

6. Geber nach Anspruch 1,
dadurch gekennzeichnet,
daß der Kontaktträger (14) entsprechend einer gestuften Öffnung des Gehäuses (7) einen breiten Abschnitt (14a) und einen schmalen Abschnitt (14b) aufweist,
daß, ausgehend von den zwischen den beiden Abschnitten (14a, 14b) befindlichen Schultern (24, 25) in dem breiten Abschnitt (14a) unterschiedlich tiefe Aussparungen (27, 28) vorgesehen sind und
daß am jeweiligen Grunde der Aussparungen (27, 28) jeweils ein Leiter (17, 18) eines Signalstromkreises angeschweißt ist.

## Claims

1. Pickup (6) for the operating state of brakes, having a wear sensor (14, 17, 18, 20) and a temperature sensor (15) which are embedded together in a sleeve-shaped housing (7) which can be inserted into a throughbore located in a brake shoe (1) and brake lining (2) of a brake such that one end face of the housing (7) is substantially flush with the friction surface of the brake lining (2), characterized in that there is provided a metal contact carrier (14) which can be inserted flush with the friction surface into the housing (7) and which serves as a heat conductor and represents part of the wear sensor (14, 17, 18, 20) and in which the dimension in the direction of wear or erosion is larger than the maximum thickness of the brake lining (2), in that a conductor (17) of at least one signal circuit is welded to the contact carrier (14) at a spacing from the end thereof which is flush with the friction surface which determines the giving of a wear signal, and in that the temperature sensor (15) is spatially directly associated with the contact carrier (14) outside the wear region defined by the weld point.

2. Pickup according to Claim 1, characterized in that a loose connection is provided between the contact carrier (14) and the housing (7), and in that the contact carrier (14) is in contact with a line to earth (20) outside the wear region.

3. Pickup according to Claim 1, characterized in that a connection wire (23) of the temperature sensor (15) is welded to the contact carrier (14).

4. Pickup according to Claim 1, characterized in that the contact carrier (14) is constructed as a flat punched part which can be inserted axially parallel into the housing (7).

5. Pickup according to Claim 1, characterized in that centring tabs (29, 30) are integrally formed on the contact carrier (14).

6. Pickup according to Claim 1, characterized in that the contact carrier (14) has a wide section (14a) and a narrow section (14b) corresponding to a stepped opening in the housing (7), in that cutouts (27, 28) of different depths, starting from the shoulders (24, 25) located between the two sections (14a, 14b), are provided in the wide section (14a), and in that a respective conductor (17, 18) of a signal circuit is welded to the respective base of the cutouts (27, 28).

## Revendications

1. Capteur (6) pour l'état de fonctionnement de freins avec un capteur d'usure (14, 17, 18, 20) et avec un capteur de température (15) qui sont logés conjointement dans un boîtier (7) en forme de douille qui peut être inséré dans un alésage de passage pratiqué dans un segment de frein (1) et une garniture de frein (2) d'un frein, de telle sorte qu'une face frontale du boîtier (7) soit, pour l'essentiel, à fleur de la surface de friction de ladite garniture de frein (2),
caractérisé par le fait
qu'il est prévu, pour pouvoir être introduit dans ledit boîtier (7), à fleur de la surface de friction, un support porte-contact métallique (14) qui sert de conducteur thermique et représente une partie du capteur d'usure (14, 17, 18, 20) et pour lequel la dimension dans le sens de l'usure ou de l'enlèvement est plus grande que l'épaisseur maximale de la garniture de frein (2),
qu'un conducteur (17) d'au moins un circuit de courant de signal est soudé sur le support porte-contact (14) à une distance de l'extrémité à fleur de la surface de friction déterminant l'émission du signal d'usure et
que le capteur de température (15) est spatialement directement associé au support porte-contact (14) en dehors de la zone d'usure définie par le point de soudure.

2. Capteur selon la revendication 1,
caractérisé par le fait
qu'il est prévu un assemblage lâche entre le support porte-contact (14) et le boîtier (7),
que ledit support porte-contact (14) est relié, en dehors de la zone d'usure, à une ligne de masse (20).

3. Capteur selon la revendication 1,
caractérisé par le fait
qu'un fil de raccordement (23) du capteur de température (15) est soudé sur le support porte-contact (14).

4. Capteur selon la revendication 1,
caractérisé par le fait
que le support porte-contact (14) a été réalisé sous la forme d'une pièce estampée plate pouvant âtre introduite parallèlement à l'axe dans le boîtier (7).

5. Capteur selon la revendication 1,
caractérisé par le fait
que des pattes de centrage (29, 30) sont moulées sur le support porte-contact (14).

6. Capteur selon la revendication 1,
caractérisé par le fait
que, conformément à une ouverture graduée du boîtier (7), le support porte-contact (14) présente une section large (14a) et une section étroite (14b),
que, en partant des épaulements (24, 25) situés entre lesdites deux sections (14a, 14b), des évidements (27, 28) de profondeurs différentes sont prévus dans la section large (14a) et
qu au fond respectif desdits évidements (27, 28) est soudé respectivement un conducteur (17, 18) d'un circuit de courant de signal.
